# EUROPEAN PATENT APPLICATION

(11) **EP 3 714 744 A1**
(43) Date of publication of application: **30.09.2020**
(21) Application number: 18880723.4
(22) Date of filing: 16.11.2018
(51) Int. Cl.: A47J 31/44, A47J 31/40, A47J 31/36, A47J 31/06, B65D 85/804

(54) **FILTER FOR A BEVERAGE PREPARATION**

(30) Priority: 21.11.2017 ES 201731419 U
(71) Applicant: Cocatech, S.L.U., 28001 Madrid (ES)
(72) Inventor: SALATA, Alberto, Madrid 28001 (ES); BIRIGA Y MINGUEZ, Miguel, Madrid 28001 (ES); RIVERO MARTÍNEZ, Santiago, Madrid 28001 (ES); OCON BERANGO, Rafael, Madrid 28001 (ES)
(74) Representative: Ungria López, Javier
(86) International application number: PCT/ES2018/070739
(87) International publication number: WO 2019/102050

(57) **Abstract**

The invention relates to a filter for a beverage preparation capsule, comprising a surrounding structure in the form of a bowl including a base (4) with through-holes (6), a side wall (3) extending from the base (4), and a mouth (5). The filter also comprises an annular channel (9) located outside the side wall (3) of the filter (1) around the mouth (5) of the filter (1). The design of the surrounding structure of the filter allows a larger amount of food product to be housed. The invention is also characterized in that the mouth (5) of the surrounding structure improves the product flooding process when a high-pressure fluid is injected into the capsule and uniformly floods the entire space occupied by the food product inside the capsule.

## Description

### Object of the invention

The present invention relates to a filter for a beverage preparation capsule comprising a surrounding structure having a bottom with a filtering surface with a distribution of through-holes that accurately defines said filtering surface and thereby achieves better functioning of the capsule set that accommodates a food product therein. Furthermore, the surrounding structure of the filter enables a larger quantity of food product to be accommodated and a characteristic configuration of a mouth of the filter is also worth noting, which improves the product flooding process when a high-pressure fluid is injected into the capsule and uniformly floods the entire space occupied by the food product inside the capsule.

Thus, the filter of the invention is applicable to beverage preparation capsules containing the food product therein and to which a fluid is injected to obtain for example teas and coffee.

### Technical problem to be solved and background of the invention

At present, beverage preparation capsules are known wherein, after mixing a liquid with a food product such as teas and coffee, said mixture is filtered inside the capsule through a filtering surface.

For example, Spanish patent with application number 201231337 is known, wherein a capsule for producing a beverage is described comprising a filter with a filtering surface in the inner space thereof, through which the mixture passes before being extracted to the outside through a lower mouth of the capsule.

Due to the pressure reached inside the food beverage preparation capsule when a liquid is injected therein, the filter tends to destabilize and move internally due to the stresses to which said filter is subjected, which causes abnormal operation inside the capsule.

Spanish patent with application number P 201330709 is also known, which refers to a beverage preparation capsule structure, such that although this capsule structure solves the problems described in the previous patent P 201231337, it does not solve a problem relating to a crater that forms in the volume of the food product when the liquid is injected inside the capsule, such that the formation of said crater creates a channel through which part of the liquid is evacuated directly to the outlet mouth of the capsule with a poor mixture of the tea or coffee; the formation of said crater even being able to cause a portion of the food product to not be soaked by the liquid injected into the capsule.

### Description of the invention

In order to achieve the objectives and avoid the drawbacks mentioned in the preceding sections, the invention proposes a filter for a beverage preparation capsule comprising a surrounding structure in the form of a bowl including a base with through-holes, a side wall extending from said base, and a mouth.

The filter further comprises an annular channel located outside the side wall of the filter around the mouth of said filter.

The annular channel is enclosed between an inclined generatrix extension that is convergent towards the inner space of the filter; an outer partition and an inner partition; wherein the extension is attached to the side wall of the filter.

The inner partition is a continuation of the side wall of the filter and the outer partition is attached to an outer portion of the extension; wherein the extension is attached to the side wall of the filter.

In a first embodiment of the invention, the outer partition and the inner partition have the same height; wherein perimeter edges of both partitions are contained in the same plane; in a second embodiment of the invention, the outer partition has a greater height than the inner partition; and in a third embodiment of the invention, the outer partition has a lower height than the inner partition.

The attachment of the extension to the side wall of the filter is reinforced by a succession of ribs located around the entire contour of said side wall; wherein said ribs are attached to outer faces of the extension and side wall of the filter.

The base of the filter includes a first intermediate annular portion including the through-holes, a second central portion, and a third annular portion adjacent to the side wall of the filter; wherein the first intermediate annular portion is located between the second central portion and the third annular portion.

The filter of the invention further comprises axial ribs attached to an inner face of the side wall, as well as to an inner face of the inner partition that is a continuation of said side wall.

The filter further comprises inner radial ribs attached to an inner face of the base; and outer radial ribs attached to the outer face of said base; wherein the inner radial ribs and the outer radial ribs are located in the same radial planes.

Next, to help better understand this specification and as an integral part thereof, a series of figures is attached in which the object of the invention is depicted in an illustrative and non-limiting manner.

### Brief description of the figures

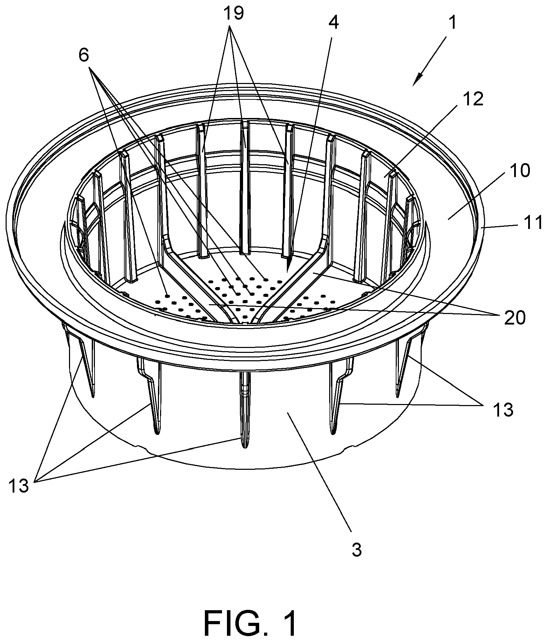

**Figure 1** shows a perspective view of the filter for a beverage preparation capsule, object of the invention.

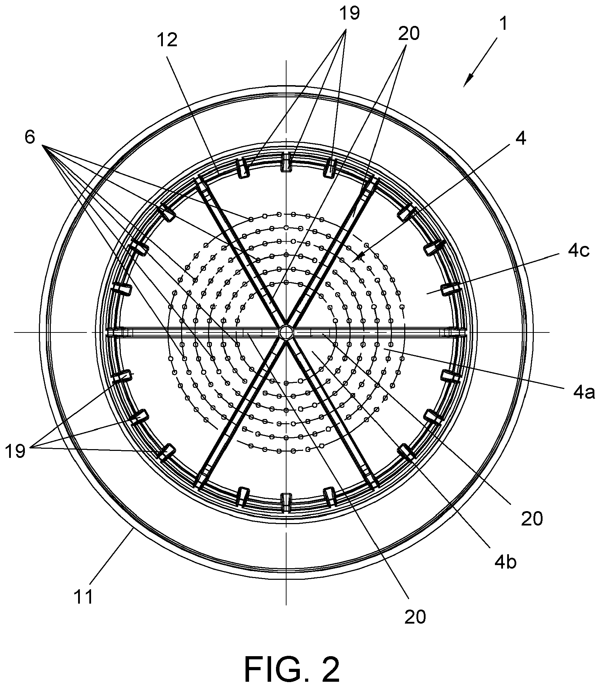

**Figure 2** shows a top plan view of the filter of the invention.

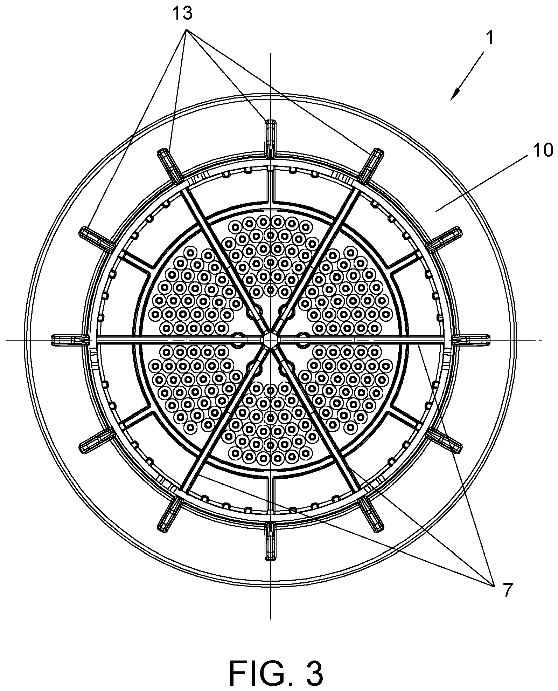

**Figure 3** shows a bottom plan view of the filter of the invention.

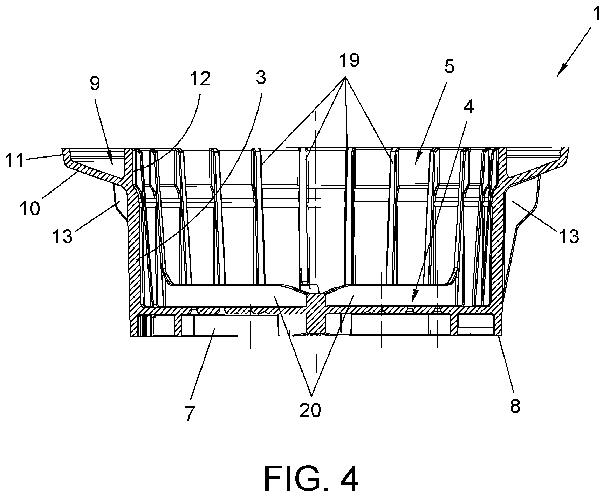

**Figure 4** shows a cross section top view of the filter for a beverage preparation capsule.
**Figure 5** shows a cross section view of a beverage preparation capsule.

### Description of an exemplary embodiment of the invention

Pursuant to the numbering adopted in the figures, the filter 1 for a beverage preparation capsule 2 comprises a surrounding structure in the form of a bowl including a side wall 3, a base 4 and a mouth 5.

The base 4 includes a first intermediate annular portion 4a including a set of through-holes 6 for filtering a mixture formed by a food product and a liquid fluid that is injected into the capsule 2; wherein at least a portion of the food product is poured into a cavity enclosed by the surrounding structure of the filter 1.

The base 4 further includes a second central portion 4b without through-holes 6 and a third annular portion 4c adjacent to the side wall 3 of the filter 1; wherein the first intermediate annular portion 4a is located between the second central portion 4b and the third annular portion 4c.

On the other hand, the base 4 of the filter includes an inner face and an outer face from which outer radial ribs 7 extend attached by their divergent ends to an annular portion 8 protruding from underneath the outer face of the base 4; wherein said annular portion 8 is an extension of the side wall 3 of the filter 1.

The outer radial ribs 7 separate several angular sectors belonging to the base 4, each of which comprises: a share of each intermediate annular portion 4a including a group of through-holes 6, a share of each second central portion 4b of the base 4 and a share of each third annular portion 4c of said base 4.

The filter 1 includes in the area of the mouth 5 thereof, an annular channel 9 located outside the side wall 3 of the filter 1; wherein said annular channel 9 is enclosed by an inclined generatrix extension 10 that is convergent towards the inner space of the filter 1; an outer partition 11 and an inner partition 12; wherein in the embodiment shown in the figures, the inner partition 12 is a continuation of the side wall 3 of the filter 1 and the outer partition 11 is attached to an outer portion of the extension 10, which is attached to the side wall 3 of the surrounding structure of the filter 1.

The attachment of the extension 10 to the side wall 3 of the filter 1 is reinforced by a succession of ribs 13 located around the entire contour of said side wall 3; wherein said ribs 13 are attached to outer faces of the extension 10 and side wall 3 of the filter.

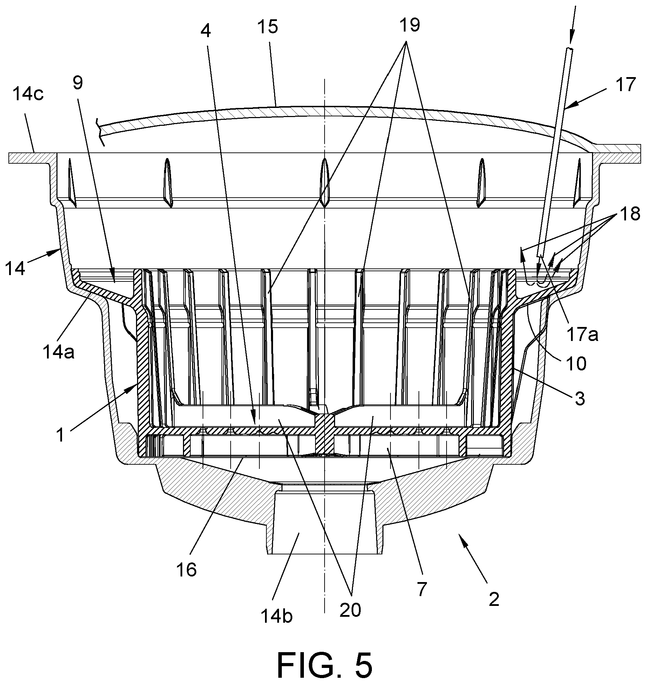

The capsule 2 set comprises the filter 1 and a container 14, inside the inner space of which the filter 1 fits; all this as shown in Figure 5.

The extension 10 of the filter 1 when inside the container 14 rests on an annular seat 14a of said container 14 which includes an outlet mouth 14b to be able to extract the mixture of liquid fluid and food product.

On the other hand, the capsule 2 includes a first sealing film 15 located above the mouth 5 of the filter 1 and a second sealing film 16 located underneath the filter 1; where, between said sealing films 15, 16 and portions of the filter 1 and the container 14, a hermetically sealed flood space is generated, wherein the food product is initially accommodated.

In the embodiment shown in the figures, the first sealing film 15 is attached to the perimeter edge 14c that encloses a mouth of the container 14, while the second sealing film 16 is attached to an edge of the annular portion 8 of the filter 1.

On the other hand, the filter of the invention comprises axial ribs 19 attached to an inner face of the side wall 3 as well as to an inner face of the inner partition 12 which is a continuation of the side wall 3.

The filter of the invention further comprises inner radial ribs 20 attached to the inner face of the base 4; wherein the inner radial ribs 20 are located in the same radial planes as the outer radial ribs 7 also attached to the base 4.

Both the axial ribs 19 and the ribs 13, as well as the outer radial ribs 7 and radial inner ribs 20 provide significant reinforcement to the filter set of the invention.

With this described arrangement, when the capsule 2 is to be used to obtain the food mixture, the liquid fluid is first injected into said capsule 2 by means of a cannula 17 that previously passes through the first sealing film 15 until placing one end 17a of the cannula 17 facing the channel 9, such that in this situation, the flood space of the capsule is flooded with liquid fluid, the pressure gradually increasing; such that there comes a time when the second sealing film 16 breaks or fractures; at which time the liquid mixture to be consumed by a user flows outside through the outlet mouth 14b located in a lower portion of the container 14.

It is noted that the jet of liquid fluid exiting through the end 17a of the cannula 17 is projected into the channel 9 initially flooding said channel 9, thereby avoiding the formation of the crater that forms in conventional capsules. It is further noted that said channel 9 ensures that the food product is completely soaked, and that it is soaked uniformly.

The stream of liquid flowing through the end 17a of the cannula 17 is projected into the channel 9 causing initial currents 18 that first point towards a bottom of the channel 9 and then are diverted towards an annular mouth of said channel 9; all this as shown more clearly in Figure 5.

## Claims

1. A **filter for a beverage preparation capsule,** comprising a base (4) with through-holes (6); **characterized in that** it comprises:
- a surrounding structure in the form of a bowl including a base (4), a side wall (3) extending from the base (4), and a mouth (5);
- an annular channel (9) located outside the side wall (3) of the filter (1) around the mouth (5) of the filter (1).

2. **The filter for a beverage preparation capsule,** according to claim 1, **characterized in that** the annular channel (9) is enclosed between an inclined generatrix extension (10) that is convergent towards the inner space of the filter (1); an outer partition (11) and an inner partition (12); wherein the extension (10) is attached to the side wall (3) of the filter (1).

3. **The filter for a beverage preparation capsule,** according to claim 2, **characterized in that** the inner partition (12) is a continuation of the side wall of the filter (1) and the outer partition (11) is attached to an outer portion of the extension (10); wherein the extension (10) is attached to the side wall (3) of the filter (1).

4. **The filter for a beverage preparation capsule,** according to any one of the preceding claims 2 or 3, **characterized in that** the outer partition (11) and the inner partition (12) have the same height; wherein perimeter edges of both partitions (11, 12) are contained in the same plane.

5. **The filter for a beverage preparation capsule,** according to any one of the preceding claims 2 or 3, **characterized in that** the outer partition (11) has a greater height than the inner partition (12).

6. **The filter for a beverage preparation capsule,** according to any one of the preceding claims 2 or 3, **characterized in that** the outer partition (11) has a lower height than the inner partition (12).

7. **The filter for a beverage preparation capsule,** according to any one of the preceding claims 2 to 7, **characterized in that** the attachment of the extension (10) to the side wall (3) of the filter (1) is reinforced by a succession of ribs (13) located around the entire contour of said side wall (3); wherein said ribs (13) are attached to outer faces of the extension (10) and side wall (3) of the filter (1).

8. **The filter for a beverage preparation capsule,** according to any one of the preceding claims, **characterized in that** the base (4) includes a first intermediate annular portion (4a) including the through-holes (6), a second central portion (4b), and a third annular portion (4c) adjacent to the side wall (3) of the filter (1); wherein the first intermediate annular portion (4a) is located between the second central portion (4b) and the third annular portion (4c).

9. **The filter for a beverage preparation capsule,** according to any one of the preceding claims, **characterized in that** it comprises axial ribs (19) attached to an inner face of the side wall (3) as well as to an inner face of the inner partition (12) which is a continuation of said side wall (3).

10. **The filter for a beverage preparation capsule,** according to any one of the preceding claims, **characterized in that** it comprises inner radial ribs (20) attached to an inner face of the base (4); and outer radial ribs (7) attached to the outer face of said base (4); where the inner radial ribs (2) and the outer radial ribs (7) are located in the same radial planes.
